# EUROPÄISCHE PATENTSCHRIFT

(11) **EP 0 970 392 B1**
(45) Veröffentlichungstag und Bekanntmachung des Hinweises auf die Patenterteilung: **21.05.2003**
(21) Anmeldenummer: 98924035.3
(22) Anmeldetag: 23.03.1998
(51) Int. Cl.: G01S 17/89

(54) **MESSVERFAHREN UNTER EINBEZIEHUNG DER LASERTECHNIK FÜR DREIDIMENSIONALE OBJEKTE**
MEASURING SYSTEM USING LASER TECHNIQUE FOR THREE-DIMENSIONAL OBJECTS
PROCEDE DE MESURE UTILISANT LA TECHNIQUE LASER POUR LES OBJETS TRIDIMENSIONNELS

(30) Priorität: 24.03.1997 DE 19712208; 21.03.1998 DE 19812431
(43) Veröffentlichungstag der Anmeldung: 12.01.2000
(73) Patentinhaber: Uteda - Dr. Niebuhr GmbH, 06120 Halle (DE)
(72) Erfinder: NIEBUHR, Erik, D-06114 Halle (DE)
(74) Vertreter: Voigt, Wolf-Rüdiger
(86) Internationale Anmeldenummer: DE9800833
(87) Internationale Veröffentlichungsnummer: WO98043113

(56) Entgegenhaltungen:
- DE-A- 4 119 180
- DE-A- 4 210 245
- DE-A- 19 543 299

## Beschreibung

Die Erfindung betrifft ein lasergestütztes Vermessungssystem für dreidimensionale Objekte und komplizierte Oberflächen. Dreidimensionale Objekte im Sinne der Erfindung sind vorzugsweise die Innenräume von Gebäuden mit Treppenhäusern und Fluren, d. h. alle Innenräume vom Keller bis zum Boden. Geologische Hohlräume mit komplizierten Oberflächen sollen weiterhin als Beispiele genannt werden, deren Vermessung mit dem neuen Meßsystem unter Einbeziehung der Lasertechnik möglich ist.

In den Berufsgruppen Architektur, Baugewerbe, Gutachter und Restauratoren aber auch bei Vermessungsfirmen, Geologen und Archäologen ist das manuelle Ausmessen vorhandener Innenräume (sogenanntes "Aufmaß") oder natürlicher Hohlräume ein äußerst häufiger und zum Teil komplizierter Arbeitsgang, der mit erheblichem zeitlichen und personellen Aufwand verbunden ist. Zusätzlich treten durch den Faktor "Mensch" Fehler und Meßungenauigkeiten auf, die nur durch wiederholtes Ausmessen beseitigt werden können. In diesem Zusammenhang ist festzustellen, daß durch die übliche Verfahrensweise, indem nicht ausreichend Meßpunkte manuell ermittelt werden, weitere Ungenauigkeiten im Sinne der verformungsgerechten Darstellung unvermeidbar sind.

Es ist bekannt, daß seit Jahren Vermessungen von Gebäuden auf fotogrammetrischem Wege durchgeführt werden. Dazu ist festzustellen:
- Die Auswertung der als digitalisierte Fotos vorliegenden Messungen ist bisher höchstens in Teilbereichen automatisiert, im wesentlichen erfolgt die Erkennung und Festlegung der Objektbegrenzungen (sichtbare Kanten und Kehlen) manuell.
- Wegen des begrenzten Öffnungswinkels bzw. der starken Randverzerrungen bei großen Öffnungswinkeln ("Froschauge") werden fast ausschließlich Fassaden oder architektonische Details vermessen.
- Der große manuelle Aufwand und damit verbundene Kosten sind sehr hoch. Zudem ist es mit den derzeitig verfügbaren Meßverfahren nur möglich, maximal 3000 Meßpunkte pro Arbeitstag zu ermitteln.

Eine Meßmethode im Zusammenhang mit der Lasertechnik ist das Pulslaufzeitverfahren. Ein extrem kurzer Lichtimpuls wird von einer Laserquelle ausgesandt und über einen mit hoher Winkelgeschwindigkeit rotierendem Spiegel abgelenkt. Diese Lichtimpulse werden von einem bis 50 m entfernt liegenden Meßobjekt reflektiert und von einem vorhandenen Empfänger im Laserscanner registriert. Die Zeit zwischen Aussenden und Empfangen wird gemessen und damit die Entfernung zum abgetasteten Meßobjekt für jeden Strahl und fiir jeden Punkt auf der abgetasteten Fläche bestimmt. Diese Meßmethode mittels eines einzelnen Lichtimpulses vom Sender zum Meßpunkt und zurück zum Empfänger wird "Pulslaufzeitverfahren" genannt.

In diesem Zusammenhang soll auf die DE 43 40 756 A 1 mit dem Titel "Laserabstandsermittlung" hingewiesen werden. Ein Laserradar weist einen Impulslaser, der gesteuert Lichtimpulse in einen Meßbereich abgibt, eine Fotoempfangsanordnung, welche die von einem im Meßbereich befindlichen Objekt zurückgeworfenen Lichtimpulse empfängt, und eine Auswerteschaltung auf, welche unter Berücksichtigung der Lichtgeschwindigkeit aus der Zeit zwischen Aussendung und Empfang eines Lichtimpulses ein für den Abstand des Objektes charakteristisches Abstandssignal ermittelt. Zwischen dem Meßbereich und dem Impulslaser ist eine Lichtablenkvorrichtung angeordnet, welche die Lichtimpulse unter sich zunehmend verändernden Winkeln in den Meßbereich lenkt und gleichzeitig an die Auswerteschaltung ein fiir ihre momentane Winkelstellung repräsentatives Winkelpositionssignal abgibt. Die Auswerteschaltung ermittelt aus dem Abstandssignal und dem Winkelpositionssignal den Ort des Objektes innerhalb des Meßbereiches.

Die Menge der in einer Ebene über einen Halbkreis gewonnenen Entfernungswerte wird im folgenden als "Meßfächer" bezeichnet.

Die erläuterten Beispiele zeigen, daß es nicht möglich ist, unter Anwendung moderner Technik, wie zum Beispiel mit Digitalkameras oder unter Anwendung der Lasertechnik, dreidimensionale Räume rationell und mit hinreichender Genauigkeit, wie z. B. beim Aufmaß erforderlich, verformungsgerecht zu vermessen. Es ist nicht möglich, bei größeren dreidimensionalen Objekten genaue Meßwerte im Sinne eines durchgehenden Datensystems im Büro so aufzubereiten, daß damit alle Abmessungen des dreidimensionalen Objektes fiir die weitere Bearbeitung zur Verfügung stehen. Wie anfangs schon gesagt wurde, bedeutet auch die Auswertung digitalisierter Fotos (nur in Teilbereichen Automatisierung möglich) keine grundlegende Vereinfachung beim Vermessen der Objekte.

Gemäß DE 42 10 245 C2 wird ein topografisches Aufnahmesystem für einen Flugkörper zur Geländeabtastung beschrieben. Dabei handelt es sich um ein topografisches Meßverfahren, das zur Auswertung der Messung die Absolutkoordinaten benötigt. Diese werden durch GPS-Systeme und die in Flugzeugen vorhandene INS (Inertiales Navigationssystem) bereitgestellt. Zum Stande der Technik wird in der o. g. DE 42 10 245 C2 gesagt, daß durch Aufsuchen homologer Bildpunkte in einer nachgeordneten Signalvorbereitungsstufe es so möglich ist, aus den Bildsignalen die zur Auswertung erforderlichen Flugorientierungsdaten in allen sechs Freiheitsgeraden zu berechnen und stereoskopische Bildstreifen bzw. ein dreidimensionales Modell des überflogenen Geländes in digitalisierter Form zu erstellen. Mit der Weiterentwicklung des Standes der Technik durch die Erfindung entsprechend der DE 42 10 245 C2 werden auch weiterhin die Absolutdaten benötigt. Unter Verwendung einer Zeilenkamera und eines Entfernungssensors, denen eine Signalverarbeitungsstufe nachgeschaltet ist, erfolgt das Auffinden homologer Bildpunkte zum Berechnen stereoskopischer Bildstreifen. Die Korrelation homologer Bildpunkte erfordert jedoch einen sehr hohen Rechenaufwand und es werden Vorschläge unterbreitet, wie Abhilfe geschaffen wird.
Bei diesem Verfahren wird durch das topografische Aufnahmesystem in parallelen Streifen vermessen. Es eignet sich in keinem Fall zur 3-D-Innenraumvisualisierung und -vermessung.

Der Erfindung liegt die Aufgabe zugrunde, ein Meßverfahren vorzugsweise für Innenräume vorzuschlagen, mit dem eine einmalige automatisierte optische Vermessung und computergestützte Auswertung erfolgt und damit alle Meßdaten - auch komplizierter Objekte - zur Verfügung stehen. Der Erfindung liegt in diesem Zusammenhang weiterhin die Aufgabe zugrunde, eine komplette Visualisierung des 3 -D-Raumes aus den digitalen Meßwerten zu ermöglichen.

Erfindungsgemäß wird die Aufgabe wie folgt gelöst, wobei hinsichtlich der grundlegenden erfinderischen Lösung auf den Anspruch 1 verwiesen wird. Die weitere Ausgestaltung der Erfindung ergibt sich aus den Patentansprüchen 2 bis 6.

Zum erfindungsgemäßen Verfahren ist weiterhin auszuführen: Der Meßfächer ist vertikal angeordnet und wird horizontal bewegt. Durch diese Verfahrensweise wird eine Menge von gitterförmigen angeordneten Punkten auf den begrenzenden Flächen einer kugelförmigen Umgebung geliefert, mitsamt deren Entfernung zum Meßpunkt.

Damit ein Raum dreidimensional erfaßt werden kann, muß der Meßfächer um 360° gedreht werden. Um eine Anzahl von gemessenen Punkten zu erhalten, die fiir die in der Praxis notwendigen Genauigkeit erforderlich ist, sind bei dieser Drehung Meßabstände unter 0,25° zu wählen.

Die Meßwerte der einzelnen Meßfächer werden in Echtzeit zu einem Steuerrechner übertragen. Durch die große Anzahl der anfallenden Meßwerte und mit Hilfe des durch die Auswertungssoftware durchgeführten statistischen Ausgleichs wird eine praxisrelevante Genauigkeit erreicht, wie auch eine vertretbare Zeit fiir eine Rundummessung. Die Gesamtvermessungszeit fiir einen gesamten Innenraum beträgt ca. 4 min., wobei das Verfahren eine variable Geschwindigkeit der Drehvorrichtung vorsieht. Dadurch kann die Messung den örtlichen Erfordernissen angepaßt werden. Verfahrungsgemäß ist jeder Meßwert digitalisiert und steht im mathematischen Bezug zu seinem Nachbarpunkt. Die vorhandene Punktwolke entsprechend der Oberfläche der Innenraumhülle wird in der Form ausgewertet, daß die Punkte Klastern zugeordnet werden. Über zweidimensionale Regression werden diese Beziehungen in einer Flächengliederung mathematisch erfaßt. Es entsteht somit der analytische Ausdruck einer Ebene im Raum. Entsprechend der Position und der Steigerung lassen sich unterschiedliche Ebenentypen definieren. Alle Ebenen werden kombiniert, ihre Schnittflächen ergeben Geraden für den Aufbau eines 3-D-Drahtmodells mit Bemaßung als verformungsgerechte CAD-Zeichnung.

Hinzuzufügen ist, daß parallel zur Rundummessung mit dem Laserscanner der zu vermessende Raum zusätzlich über eine Digitalkamera erfaßt werden kann. Die digitalen Bilder können beim Arbeitsgang "Auswerten der Meßdaten" und beim evtl. Nacharbeiten der Objektdaten zusätzliche Informationen liefern. Weiterhin können bei der Präsentation der Objektdaten fotorealistische Darstellungen der vermessenen Objekte ergänzend erzeugt werden.

Anhand eines Ausführungsbeispiels soll die Erfindung nunmehr erläutert werden.

Die einzelnen Figuren zeigen:
- Figur 1: Blockschaltbild gemäß Meßverfahren
- Figur 2: Nivelliereinrichtung mit Darstellung der Meßfächerbewegung
- Figur 3: Anordnung der Meßpunkte

Die verwendeten Bezugszeichen bedeuten:
- 1: Laserscanner
- 2: Videokamera
- 3: Aufnahmeeinrichtung
- 4: Nivelliereinrichtung
- 5: Stativ
- 6: Steuerrechner
- 7: Stromversorgung
- 8: Energiefluß
- 9: Informationsfluß
- 10: Stoffschluß (mechanische Verbindung)
- 11: Meßfächer
- 12: automatische Unterbrechung

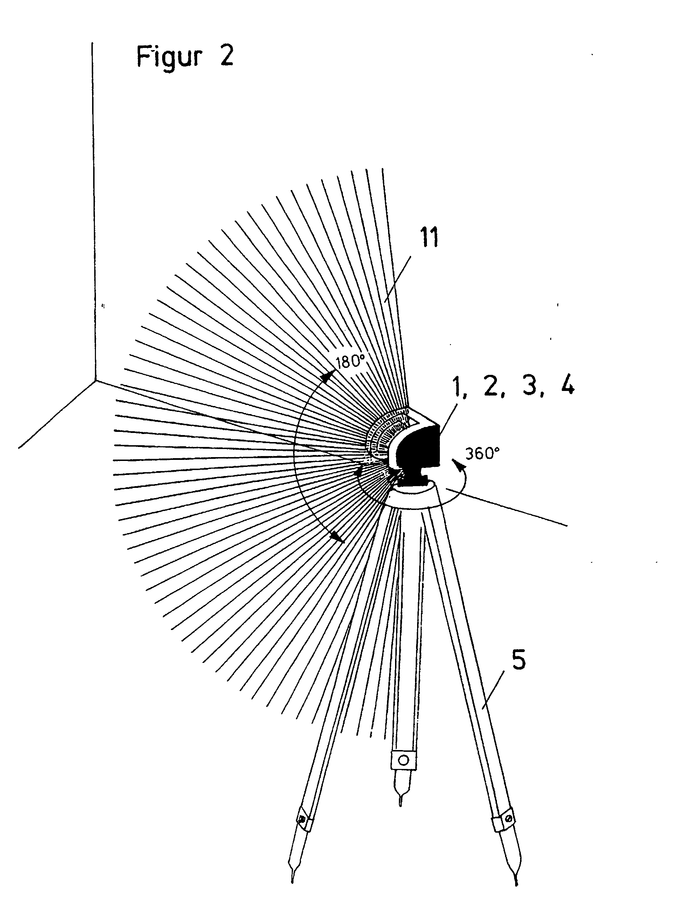

Der nach der Pulslaufzeitmessung arbeitende Laserscanner 1 ist in der Lage, die Entfernung beliebiger Gegenstände mit einer Genauigkeit von ± 1 mm im Bereich von 200 m Durchmesser zu messen. Durch entsprechende Steuerung des Laserscanners 1 im Meßvorgang werden alle Flächen eines Raumes einzeln vermessen. Gemäß Figur 2 ist ersichtlich, welche Lichtimpulse zur fächerförmigen Darstellung (Meßfächer 11) erforderlich sind und wie der Meßfächer 11 um 360° gedreht wird.

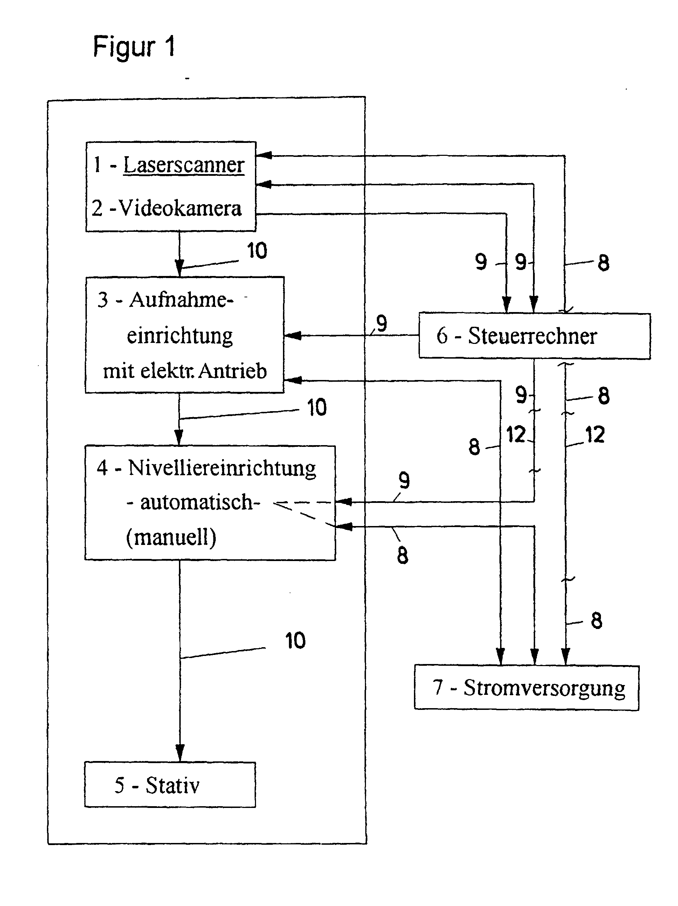

Auf dem Stativ 5 ist die Nivelliereinrichtung 4, die Aufnahmeeinrichtung 3 für den Laserscanner 1 und die Videokamera 2 (Digitalkamera) angeordnet. Der Stoffschluß 10 zwischen diesen Bauteilen erfolgt durch mechanische Verbindungen.
Gemäß Figur 1 ist ausgehend von der Stromversorgung 7 der Energiefluß 8 erkennbar. Der Informationsfluß 9 erfolgt zwischen Steuerrechner 6 und automatischer Nivelliereinrichtung 4, zwischen Steuerrechner 6 und Aufnahmeeinrichtung 3 (mit elektrischem Antrieb) sowie zwischen Steuerrechner und Laserscanner 1 und weiterhin Videokamera 2. Mit den Positionszeichen 12 ist eine automatische Unterbrechung und Rücksetzung auf "0" = Start bei Ungenauigkeit bezeichnet.

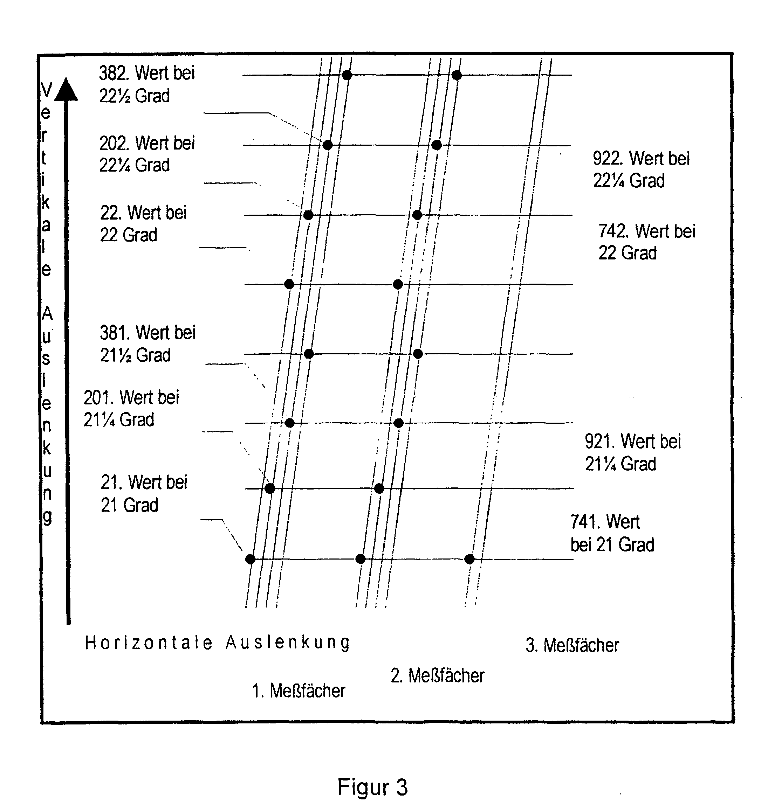

Es sei hervorgehoben, daß sich die Aufnahmeeinrichtung kontinuierlich in 0,25°-Schritten um 360° dreht. Dabei ist die Richtung eines Meßfächers nicht mehr orthogonal zur horizontalen Drehrichtung, sondern, wie in Figur 3 skizziert. Weil dabei mehrere nacheinander durchgeführte Messungen nicht die gleichen Punkte erreichen, kann der im Laserscanner intern ausgeführte Ausgleich der Meßwerte nicht genutzt werden. Jedoch ist durch die große Zahl der anfallenden Meßwerte ein statistischer Ausgleich in der Auswertungssoftware möglich. Damit wird eine praxisrelevante Genauigkeit der Ergebnisse nach der Auswertung erreicht.

Die Auswertung der Meßdaten wird komplett zeitlich unabhängig von der Erfassung am Auswertungsrechner vorgenommen. Das Auswertungsprogramm übernimmt - bei Bedarf im Dialog mit dem Bearbeiter - die Erkennung der einzelnen Elemente des Objektes. Die Meßpunkte werden dabei den begrenzenden Flächen eines Raumes zugeordnet. Dabei wird die Streuung der Meßwerte mit berücksichtigt und eine Verbesserung der Genauigkeit durch Mittelwertbildung des umfangreichen Zahlenmaterials (ca. 100.000 bis 200.000 Werte pro Wand) erreicht.

Bei komplizierten Strukturen und kritischen Meßpunkten, wie z. B. den Ausgangspunkten der benachbarten Messung, wird vom Bearbeiter durch den Vergleich mit den Aufnahmen der Digitalkamera, die synchron zu den Meßwerten und den bereits erkannten Elementen auf dem Bildschirm angezeigt werden, die Interpretation überwacht und gegebenenfalls korrigiert.

Die Daten der einzelnen Räume werden miteinander kombiniert und zu einem Modell des gesamten Objektes zusammen gestellt (dadurch werden z. B. aus den Begrenzungsflächen benachbarter Räume die Wände zwischen diesen Räumen). Bei mehreren Ausgangspunkten in einem Raum wird entsprechend verfahren. Das erzeugte Modell wird zur weiteren Verwendung aufbereitet. Alle Wände werden in einzelne Segmente aufgelöst, die aus geometrischen Grundformen bestehen. Dabei werden zusammengehörende Elemente erkannt. Ein Bearbeiter kann diesen Vorgang ebenfalls im Dialog beinflussen. Das Ergebnis dieses Arbeitsschrittes ist eine Datei im "DXF"-Format, die das vermessene Objekt als 3D-Zeichnung repräsentiert und z.B. von AutoCad direkt benutzt werden kann.

## Patentansprüche

1. Meßverfahren unter Einbeziehung der Lasertechnik für dreidimensionale Objekte, vorzugsweise fiir Innenräume unter Berücksichtigung des Pulslaufzeitverfahrens durch Aussendung und Empfang von Laserimpulsen im Sinne eines Meßfächers, **dadurch gekennzeichnet, daß** ein Laserscanner (1) die Laserimpulse sendet und empfängt, daß der durch die Laserimpulse gebildete halbkreisförmige Meßfächer (11) einmal um 360° gedreht wird, die ermittelten Meßdaten digitalisiert sind und jeder Meßwert in mathematischen Bezug zu seinem Nachbarpunkt steht, die vorhandene Punktwolke entsprechend der Oberfläche der Innenraumhülle in der Form ausgewertet wird, daß die Punkte Klastern zugeordnet werden, über zweidimensionale Regression diese Beziehungen in einer Flächengliederung erfaßt werden, über den analytischen Ausdruck einer Ebene im Raum entsprechend der Position und der Steigerung unterschiedliche Ebenentypen definiert werden und diese Ebenen derartig kombiniert werden, daß ihre Schnittflächen Geraden ergeben für den Aufbau eines 3-D-Drahtmodells.

2. Meßverfahren nach Anspruch 1, **dadurch gekennzeichnet, daß** die Meßwerte über einen Auswertungsrechner visualisiert werden.

3. Meßverfahren nach Anspruch 1, **dadurch gekennzeichnet, daß** parallel zu dem Laserscanner (1) eine Videokamera (2) den zu vermessenden Innenraum erfäßt.

4. Meßverfahren nach Anspruch 1, **dadurch gekennzeichnet, daß** der Meßfächer (11) mit konstanter Geschwindigkeit in Schritten um 360° gedreht wird.

5. Meßverfahren nach Anspruch 1, **dadurch gekennzeichnet, daß** der Meßfächer (11) schrittweise in Meßabständen ≤ 0,25° um 360 ° gedreht wird.

6. Meßverfahren nach Anspruch 1 und 4 oder nach Anspruch 1 und 5, **dadurch gekennzeichnet, daß** das Gesamtsystem entsprechend den Bezugszeichen 1 bis 5 bei der Erfassung von Innenräumen verschieden plaziert wird.

## Claims

1. LASER-assisted measurement method for three-dimensional objects, preferably for surveying interior areas of buildings, based on the pulse-time principle by sending and receiving LASER pulses in form of a measurement fan **characterized in that** a LASER scanner (1) sends and receives the LASER pulses, and that the semicircle measurement fan (11) as formed by said LASER pulses is rotated one time by 360 degrees, the readings are digitalized with each single reading being in mathematical relation to its neighbouring reading, and the existing point cloud is analysed in accordance with the enveloping interior area surface in such a way that all these points are allocated to clusters, the resulting relations are converted by two-dimensional regression analysis into a surface structuring, different plane types are defined depending on position and gradient based on the analytical expression of such plane located in the space, and such planes are combined so that their sections result in straight lines that can be used to compile a 3D wire model.

2. Measurement method according to claim 1 **characterized in that** the readings are visualized through an evaluation computer.

3. Measurement method according to claim 1 **characterized in that** interior areas in buildings to be measured are surveyed by a video camera (2), in addition to the LASER scanner (1).

4. Measurement method according to claim 1 **characterized in that** the measurement fan (11) is stepwise rotated by 360 degrees at constant speed.

5. Measurement method according to claim 1 **characterized in that** the measurement fan (11) is rotated by 360 degrees in steps less or equal to 0.25 degrees.

6. Measurement method according to claim 1 and 4, or claim 1 and 5 **characterized in that** the entire system as defined by reference numbers 1 to 5 can be arranged in different ways for surveying interior areas in buildings.

## Revendications

1. Procédé de mesure associant la technique du laser pour les objets tridimensionnels, de préférence pour les espaces intérieurs en considération du procédé du temps de propagation de l'impulsion par l'émission et la réception des impulsions de laser dans le sens d'un éventail de mesure, **caractérisé par le fait qu'**un dispositif de balayage à laser (1) émet et reçoit les impulsions à laser, que l'éventail de mesure (11) en forme de demi-cercle formé par les impulsions à laser est tourné de 360 °, que les données de mesure déterminées sont numérisées et que chaque valeur de mesure est mathématiquement en relation avec sont point voisin, la nuée ponctuelle existante étant évaluée en fonction de la surface de l'enveloppe de l'espace intérieur en une telle forme que les points puissent être assujettis à des treillis, soient enregistrés par régression bidimensionnelle de ces relations dans une classification planiforme, soient définis par l'expression analytique d'un plan dans l'espace correspondant à la position et à la progression de différents types de plans et que ces plans soient combinés de telle manière que les surfaces de coupe donnent des droites pour le montage d'un modèle filiforme tridimensionnel.

2. Procédé de mesure selon la revendication 1, **caractérisé par le fait que** les valeurs de mesure sont visualisées par un ordinateur d'interprétation.

3. Procédé de mesure selon la revendication 1, **caractérisé par le fait que** parallèlement au dispositif de balayage à laser (1) une caméra vidéo (2) enregistre l'espace intérieur à mesurer.

4. Procédé de mesure selon la revendication 1, **caractérisé par le fait que** l'éventail de mesure (11) est tourné à vitesse constante en séquences de 360 °.

5. Procédé de mesure selon la revendication 1, **caractérisé par le fait que** l'éventail de mesure (11) est tourné progressivement de 360 ° en écarts de mesure ≤ 0,25 °.

6. Procédé de mesure selon les revendications 1 et 4 ou les revendications 1 et 5, **caractérisé par le fait que** le système complet est placé différemment selon les repères de référence de 1 à 5 lors de l'enregistrement d'espaces intérieurs.
